# EUROPEAN PATENT APPLICATION

(11) **EP 1 871 126 A1**
(43) Date of publication of application: **26.12.2007**
(21) Application number: 06012744.6
(22) Date of filing: 21.06.2006
(51) Int. Cl.: H04Q 7/38

(54) **Method and apparatuses for performing a handover of a mobile device between a source radio cell and a target radio cell within a mobile communications network**

(71) Applicant: NOKIA SIEMENS NETWORKS GMBH & CO. KG, 81541 München (DE)
(72) Inventor: Unteregger, Burghard, 1040 Wien (AT)

(57) **Abstract**

The present invention relates to method and apparatus for performing a handover of a mobile equipment (UE) between a source radio cell belonging to source network node (Source eNB) and a target radio cell belonging to a target network node (Target eNB) within a mobile communications network, whereby the source network node and the target network node are connected to each other via at least a further network node (MME/UPE. In particular the method comprises the following steps of:
- notifying the mobile equipment (UE) about the current bearer configuration by the source network node (Source eNB) to keep the configuration,
- performing a cell re-selection to the target network node (Target eNB) by the mobile equipment (UE) according to the kept configuration and
- notifying the target network node by the at least further network node to support said configuration prior to completing the handover.

## Description

Method and apparatus for performing a handover of a mobile equipment between a source radio cell belonging to source network node and a target radio cell belonging to a target network node within a mobile communications network

The present invention relates to a method and apparatus means for performing a handover of a mobile equipment between a source radio cell belonging to source network node and a target radio cell belonging to a target network node within a mobile communications network.

### BACKGROUND OF INVENTION

This invention is particularly used within a radio communications network.

In hierarchical mobile communications networks, e.g. GSM, a handover is normally performed via a source base station, at least one Gateway (MSC) in the mobile core network and a target base station. Particularly in non-hierarchical networks, e.g. WIMAX, a handover is preferably performed via a source and a target base station or so-called E-NodeBs having a connection between them. Especially concerning Long Term Evolution(LTE)/Evolved UTRAN (E-UTRAN) E-NodeBs will be connected to each other via a mesh of so-called X2-interfaces.

In reality there are probably only limited meshes between the E-NodeBs due to the below mentioned reasons:
- The X2-interface has to be maintained and mutual authentication and protection (e.g. IP sec) has to be provided. Consequently a complete mesh among all E-NodeBs would be too cost intensive.
- Because of organisation overhead limitation may even exist if E-NodeBs are in the same areas but belong to different operators sharing the E-NodeBs to increase coverage.
- Additionally detected cells might be employed i.e. a User Equipment (UE) may report a cell as the best cell which is not in the cell list provided by the source E-NodeB e.g. a cell belonging to another (equivalent) network, or being located in places where the coverage area varies. In these cases it is likely that no X2-interfaces are maintained in the E-NodeBs of these cells.

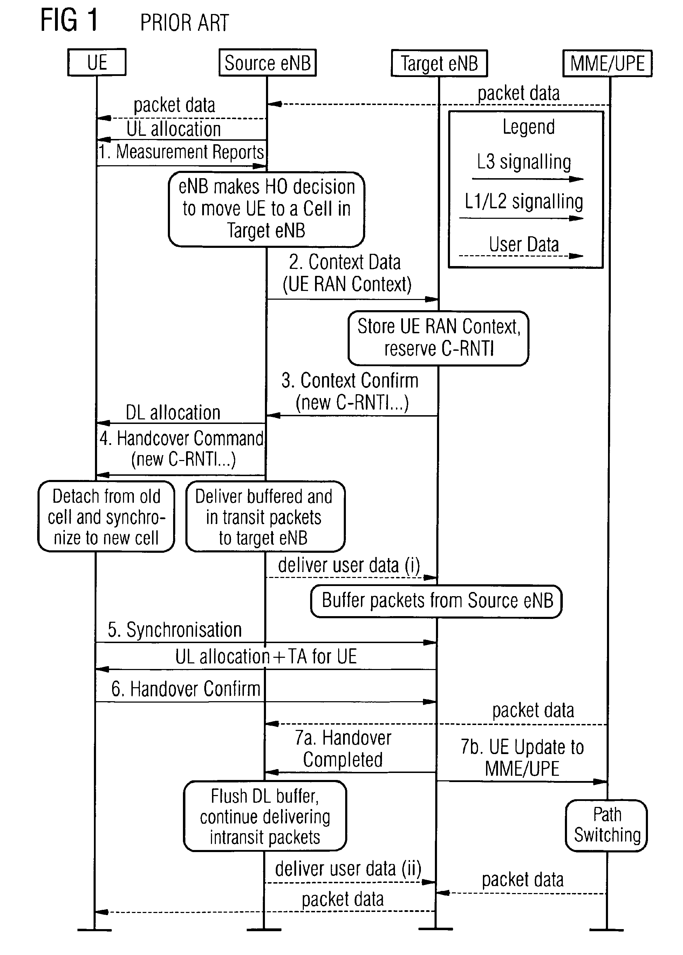

Limited meshes of X2-interface cause a problem for handover because in LTE a handover is presumably performed by the following steps (marked with 1 to 7a, 7b) as shown in Fig 1. Fig 1 shows a message flow (depicted by lines with arrows) among a user equipment UE, a source E-NodeB Source eNB, a target E-NodeB Target eNB and a mobile management equipment and/or universal processing equipment MME/UPE. In the Legend shown in Fig 1 the meaning of the different types of lines is explained whereby L1, L2, L3 means layer 1, layer 2, layer 3 of the OSI Layer Model.
Step 1: A user equipment UE reports measurement, (e.g. that another cell becomes better than the current serving cell). The source E-NodeB (e.g. source eNB) decides to perform a handover. Otherwise the call would be dropped due to coverage loss.
Steps 2, 3: If the other cell belongs to a different target E-NodeB (e.g. target eNB) the source E-NodeB contacts the target E-NodeB via X2-interface and asks for admission. If admission is granted, the source E-NodeB signals control information to the user equipment UE to perform handover to the cell belonging to that target E-NodeB.
Steps 1 to 3 show the currently proposed principle and may vary in some details.
Nevertheless the principle will be based on the existence of a connection (X2) between a source E-NodeB and a target E-NodeB.
The further steps 4 Handover Command, 5 Synchronization, 6 Handover Confirm, 7a Handover Complete and 7b UE Update to MME/UPE complete the message flow, but have no further impact on the aforementioned situation/steps.

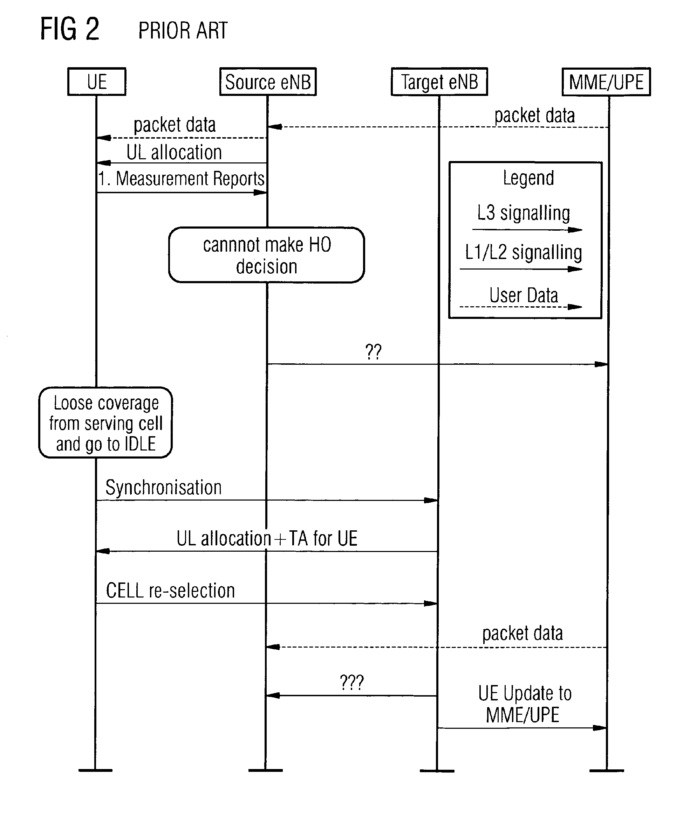

Since in the case of a mesh limitation it is not possible to perform a handover as outlined above and the UE will expect some handover message from E-Node B until it detects loss of coverage and goes to IDLE state and afterwards performs a cell reselection. In Fig 2 this situation is illustrated by the steps beginning with 1 and following with steps (e.g. CELL re-selection) having no explicite numbering.

In conclusion a lengthy interruption of the call will probably be brought about likely comprising release of radio resources and consequently the radio link failure probably will lead to a call drop.

### SUMMARY OF INVENTION

It is therefore an object of the present invention to provide a method and at least one apparatus which improve probable interruption time and reliability.

Said problem is solved by the features mentioned in the independent claims. Preferred embodiments of the invention are described in the dependant claims.

A main aspect of the invention is a method comprising the following steps of:
- notifying the mobile equipment (UE) about the current bearer configuration by the source network node (Source eNB) to keep the configuration,
- performing a cell re-selection to the target network node (Target eNB) by the mobile equipment (UE) according to the kept configuration and
- notifying the target network node by the at least further network node to support said configuration prior to completing the handover.

Preferably the at least further network node (MME/UPE) is notified about the current bearer configuration by the source network node (Source eNB) to keep the configuration.

Furthermore there are network nodes and a mobile equipment particularly being located within a mobile communications network which comprise means for performing the above-mentioned method

The invention avoids long interruption time/call drop in case of a need for handover to a cell which belongs to another E-NodeB but having no X2-interface between E-NodeBs.
The proposed invention provides the following benefits:
- Short interruption time
- No call drop
- Minimum signalling effort

The benefits are especially visible for real time services e.g. VoIP /streaming or gaming because for these services in particular there are not many packets stored in queues of the source E-NodeB and therefore the packet loss results mainly from the interruption time which is shortened by the aforementioned solution.

### BRIEF DESCRIPTION OF THE DRAWINGS

Preferred embodiments of the present invention will now be described with reference to the accompanying drawing in which:
Fig. 1 illustrates a schematic message flow for a handover between a source E-NodeB and a target E-NodeB according to prior art as aforementioned,
Fig. 2 illustrates a schematic message flow in the aforementioned case of mesh limitation and
Fig. 3 illustrates a schematic message flow according to the invention.

### DETAILLED DESCRIPTION OF THE DRAWINGS

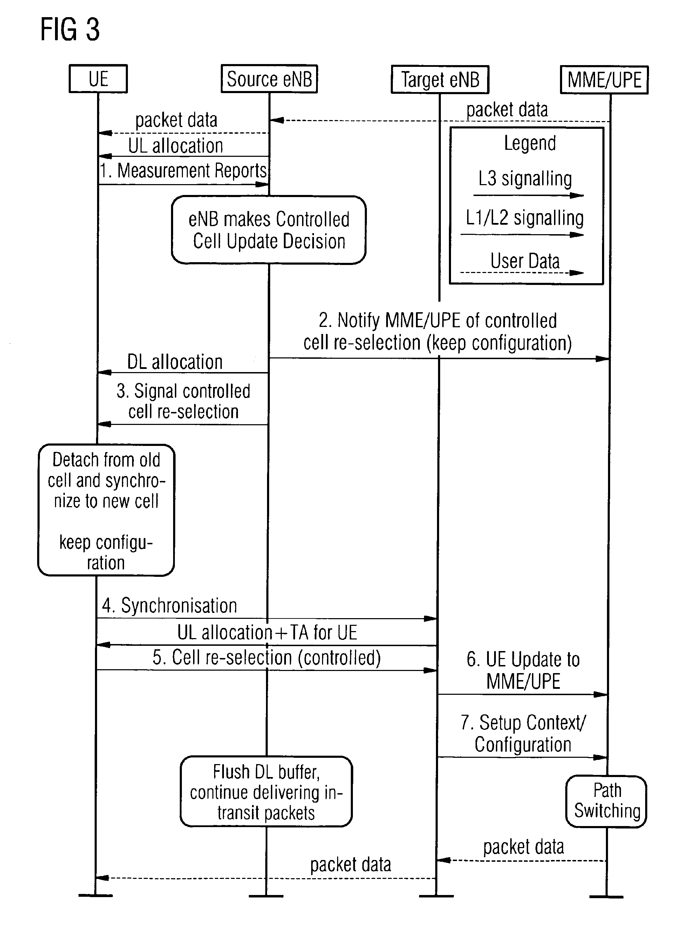

The Fig. 3 generally depicts the same network components UE, Source eNB, Target eNB and MME/UPE as described in Fig. 1 and 2.

Since the E-NodeB knows about the absence of the X2-interface, it can notify the UE and command a controlled reselection to the reported cell - thus avoiding a long interruption until a radio link failure is detected.

In addition the mechanism will also include a flag to notify the user equipment UE and/or a Gateway, e.g. mobiliy management/universal processing equipment MME/UPE, to keep the current bearer configuration and to continue the call when UE comes up with this configuration in another cell. The bearer configuration in this context means all configurations which are necessary to continue the data transfer in both directions after performing the handover procedure.

The following steps will be provided:
Step 1: A user equipment UE reports a measurement, (e.g. that another cell becomes better than the current serving cell)
Step 2, 3: The E-NodeB (source E-NodeB) decides to perform controlled Cell Update otherwise the call would be dropped because of coverage loss. It commands the user equipment UE to perform this cell update and notifies both user equipment UE and the Gateway MME/UPE to keep the configuration.
Step 4, 5, 6, 7: The user equipment UE performs a cell reselection to the target E-Node B with the flag that it is a controlled Cell re-selection with configuration kept. The Gateway MME/UPE sets the context and configuration in the target E-NodeB and the call continues.
If cell-reselection is not successful within a certain period of time (determined by a timer which is preferably configured by the network), the configuration shall be reset to a default configuration on both termination points: UE and MME/UPE.

## Claims

1. A method for performing a handover of a mobile equipment (UE) between a source radio cell belonging to source network node (Source eNB) and a target radio cell belonging to a target network node (Target eNB) within a mobile communications network, whereby the source network node and the target network node are connected to each other via at least a further network node (MME/UPE) ***characterized in*** the following steps of:
- notifying the mobile equipment (UE) about the current bearer configuration by the source network node (Source eNB) to keep the configuration,
- performing a cell re-selection to the target network node (Target eNB) by the mobile equipment (UE) according to the kept configuration and
- notifying the target network node by the at least further network node to support said configuration prior to completing the handover.

2. A method according to claim 1, wherein the at least further network node (MME/UPE) is notified about the current bearer configuration by the source network node (Source eNB) to keep the configuration.

3. A method according to claim 1 or 2, wherein a flag is set in the notification for notifying the mobile equipment (UE) about keeping said configuration.

4. A method according to claim 2 or 3, wherein a flag is set in the notification the at least further network node (MME/UPE) about keeping said configuration.

5. A method according to any of the preceding claims, wherein a flag is set by the mobile equipment (UE) in a notification for performing cell re-selection, that the last configuration is kept.

6. A method according to any of the preceding claims, wherein the configuration is reset after a certain period of time.

7. A method according to claim 6, wherein a timer, preferably configured by the network performs the method according to claim 6.

8. A network node (Source eNB) for performing the method according to any of the preceding claims **characterized in** means for notifying a mobile equipment (UE) and/or a further network node (e.g. MME/UPE) about a current bearer configuration to keep the configuration.

9. A mobile equipment (UE) for performing the method according to any of the preceding claims **characterized in** means for performing a cell reselection to a target network node (Target eNB) according to a kept configuration.

10. A network node (MME/UPE) for performing the method according to any of the preceding claims **characterized in** means for notifying the target network node about a bearer configuration prior to completing a handover.

11. A mobile communications network for performing the method according to any of the preceding claims comprising the network nodes and mobile equipment according to any of the claims 8 to 10.
